# EUROPÄISCHE PATENTSCHRIFT

(11) **EP 2 707 273 B1**
(45) Veröffentlichungstag und Bekanntmachung des Hinweises auf die Patenterteilung: **09.05.2018**
(21) Anmeldenummer: 12719394.4
(22) Anmeldetag: 09.05.2012
(51) Int. Cl.: B62J 23/00, B62K 19/48, B62J 17/00, B62J 99/00

(54) **FAHRRAD MIT FLEXIBLEN VERKLEIDUNGSTEILEN**
BICYCLE WITH FLEXIBEL COVERING PARTS
BICYCLETTE AVEC ELEMENTS D'HABILLAGE FLEXIBLES

(30) Priorität: 13.05.2011 CH 808112011; 13.05.2011 CH 809112011; 13.05.2011 CH 810112011
(43) Veröffentlichungstag der Anmeldung: 19.03.2014
(73) Patentinhaber: YouMo AG, 8640 Rapperswil (CH)
(72) Erfinder: KELLER, Christian, CH-9320 Frasnacht (CH); BURGER, Michael, 01099 Dresden (DE); SPÄTE, Knut, CH-8633 Wolfhausen (CH); BACH CASADEVALL, Pol, E-08024 Barcelona (ES)
(74) Vertreter: Schneider Feldmann AG Patent- und Markenanwälte
(86) Internationale Anmeldenummer: PCT/EP2012/058554
(87) Internationale Veröffentlichungsnummer: WO 2012/156249

(56) Entgegenhaltungen:
- EP-A1- 2 113 454
- EP-A1- 2 283 739
- CH-A- 221 145
- TW-A- 200 938 423

## Beschreibung

Die vorliegende Erfindung betrifft ein Fahrrad oder E-Bike mit einem Rahmen zur Aufnahme einer Gabel, eines Sattels, der Räder und möglicher Verschalungen etc.

Fahrräder und E-Bikes sind bekannt. Letztere weisen gegenüber manuell betriebenen Fahrrädern einen zusätzlichen Elektroantrieb auf, der von einem mitgeführten Akku gespeist wird. Der Akku wiederum wird durch Betätigung der Tretkurbel, die auch als Generator ausgebildet ist, aufgeladen. Allgemein weisen Fahrräder einen Rahmen auf, der ein Rahmenhauptrohr oder dergleichen und ein Tretlager beinhaltet. Im Rahmen ist zudem ein Sattelrohr für eine Sattelstütze des Sattels aufgenommen. Die Sattelstütze kann in hohlen Rahmenstreben (EP-A-0670260) oder in einem Lager verschieblich angeordnet sein.

In der DE-U-202008007475 ist ein Fahrrad mit einer verstellbaren Sattelstütze offenbart, wobei die Verstellung eine Verlagerung des Sattels relativ zur Sattelstütze entlang einer vorbestimmten Kurve ermöglichen soll. Dies soll beim Bergauf- und Bergabfahren eine optimale Sitzposition ermöglichen.

In der USP 7740262 wird ein Fahrraddesign vorgeschlagen, das im Stand ein sicheres abstellen der Füsse auf den Boden ermöglichen soll. Hierzu ist der Sattel vergleichsweise tief angeordnet und der Winkel zwischen Sattelrohr und Kettenstrebe soll etwa 64° bis 69° betragen.

Es ist weiterhin bekannt, zusätzliche Streben oder dergleichen über dem Hinterrad als festen Bestandteil des Rahmens anzuordnen, die als Basis eines Gepäckträgers o. a. dienen.

Gemäss DE-A-19927996 ist ein Sattelrohr mit dem Rahmenhauptrohr einstückig ausgeführt und unter dem Tretlager durchgeführt. Ein Rahmenrohr wird dazu V-förmig gebogen. Das Sattelrohr kann zudem einen verschliessbaren Transportbehälter für Werkzeug bilden. Am Sattelrohr ist ein Sattelhalterohr befestigt, in welchem die Sattelstütze in üblicher Weise angeordnet ist.

Zwischen Kettenstrebe und Tretlager kann weiterhin ein Elektromotor angeordnet sein, der nachrüstbar ist. Die Kraftübertragung auf das Tretlager erfolgt mittels Riementrieb.

Der Ketten- und Riemenbereich kann durch eine wannenförmige Abdeckung verkleidet werden.

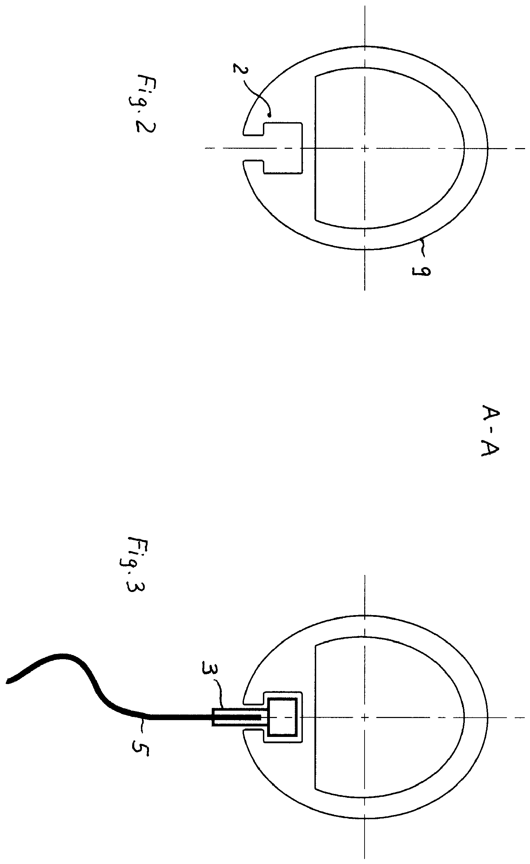

Eine mobile Stromversorgungseinheit für ein Fahrrad mit Elektroantrieb gemäss DE-C-19935847 umfasst mindestens eine Akkubox, die sicher und stabil am Rahmen montierbar sein soll und die mit einer Elektronikbox versehen ist. Die Akkubox ist abschliessbar am Rahmen angebracht und in ihrer Form an die Form der Stromzellen angepasst. Die EP 2283739 A1 zeigt weitergehend einen Helm mit einer Solarbeschichtung, wobei der Helm mit einem Fahrrad über ein elektrisch leitendes Kabel verbunden ist (Fig. 3). Der Helm ist zur Vergrösserung der Oberfläche mit einer Krempe versehen.

Bei einem Verfahren zum Betreiben eines Fahrzeuges, insbesondere eines Personenwagens mit einem elektrischen Fahrantrieb ist ein Navigationsmittels zum ansteuern der nächstgelegenen Versorgungsstation vorgesehen, da die Mitführung eines Ladesystems nicht gegeben ist. Der zu ladende Akku ist per Hand auswechselbar.

Die DE-U-202009011118 zeigt ein Elektrofahrrad mit einem Betriebsmodul zur elektrischen Versorgung eines Elektromotors mittels Akku, wobei eine Tragstruktur zur Aufnahme des Akkus an einem Rahmenteil vorgesehen ist, die das Rahmenteil umgreift und die mittels Klemmverbindung lösbar aufgenommen ist. Die Tragstruktur ist teilbar resp. aufspreizbar und kann von einer Verkleidung umgeben sein.

Allgemein bekannt sind Schutzhauben für Zweiradfahrzeuge, die nur zum Schutz des abgestellten Fahrzeuges verwendet werden (z. B. USP 3659872 oder USP 4944340), die auch luftdurchlässige Bereiche einschliessen können.

Aus der EP 21113454 A1 ist ein Beinschutz 1 bekannt, der nur bei Gebrauch die Beine und den Unterkörper des Fahrers eines Zweiradfahrzeugs gegen Wind und Regen schützt. Dieser Beinschutz muss bei Nichtgebrauch zumindest teilweise aufgerollt oder entfernt werden, um einen Abstieg des Fahrers zu ermöglichen.

Eine formstabile und aerodynamische Verkleidung für Motorräder zeigt USP 6923489. Diese enthält Durchbrüche für Beleuchtung, Griffe, Lufteinlass u. a.

Gemäss USP 370457 wird eine Verkleidung für Fahrräder vorgeschlagen, mit der der Rahmen zwischen Tretlager, Lenker und Sattelstütze umhüllt wird. Die Verkleidung wird so gebogen, dass sie symmetrisch über das Oberrohr gelegt wird und die Seitenteile zumindest bis zum Unterrohr reichen. Im Bereich des Unterrohrs sind Löcher in der Verkleidung vorgesehen, durch die um das Unterrohr herum Bänder gezogen und verknüpft werden können. Diese Art der Verkleidung ist sperrig und formgebunden und erlaubt keinen oder nur einen sehr begrenzten Zugang zu darunter befindlicher Ausrüstung o. a.

Der Erfindung liegt die Aufgabe zugrunde, ein Fahrrad oder E-Bike zu entwickeln, das mit einer einfach zu fertigenden und flexibel nutzbaren Verschalung resp. Verkleidung versehen ist.

Die Aufgabe ist mit den Merkmalen des Patentanspruchs 1 gelöst. Durch das Vorsehen von Mitteln zur verschieblichen Anordnung von flexiblen Verkleidungsteilen am Rahmen entstehen diverse Nutzungs- und Gestaltungsmöglichkeiten, die von dekorativen Zwecken bis hin zur Erhöhung der Sicherheit oder des Komforts reichen. Die Verkleidungsteile sind in entfalteter Form designbildend resp. charakterisierendes Erscheinungsmerkmal des Fahrzeugs.

Die Mittel zur verschieblichen Anordnung sind in Rahmenteilen integriert und die Verkleidungsteile weisen formgleiche Gegenstücke auf.

Bevorzugte Ausführungsformen sind in den abhängigen Ansprüchen offenbart. Die flexiblen Verkleidungsteile bestehen bevorzugt aus technischen Textilien, sie können funktionelle Verwendungen, z. B. als Tasche oder Abdeckung und/oder Oberflächen aufweisen, z. B. reflektierend, bedruckt oder mit Solarmodulen bestückt sein u. a.

Die Verkleidung ist bevorzugt verschliessbar vor unbefugtem Zugriff gesichert. Vorteilhaft sind einzelne oder sämtliche Verkleidungsteile aufziehbar, faltbar (z. B. lampionartig oder ziehharmonikaartig) und platzsparend am Rahmen verpackt und befestigt und sie können auch z. B. als Regenschutz oder als flexibles "Schutzblech" Anwendung finden.

Der Akku eines Fahrrades, insbesondere eines E-Bikes ist bevorzugt ein Wechselakku und mit einer mechanischen Lagesicherung und/oder einem elektromechanischen Diebstahlschutz versehen, was eine einfache und sichere Handhabung des Akkus, eingeschlossen wechseln und/oder aufladen desselben ermöglicht.

Die Schliesseinheit ist bevorzugt integriert und der Akku ist aus einer Hülle im Rahmen entnehmbar. Die mechanische Sicherung (Kabel) ist selbst am/im Rahmen angeschlossen. Das Kabel ist ein Sicherungskabel und ermöglicht den Abschluss des Fahrrades z. B. an einem Fahrradständer und den elektronischen Kontakt/Abschluss.

Aktivierung und Start können z. B. schlüssellos mit einem One-button Anhänger erfolgen.

Der Erfindungsgedanke ist grundsätzlich auch auf andere Fahrzeuge übertragbar, z. B. Dreiräder, Vierradfahrzeuge, Rollstühle oder LEV sofern sie einen, von einem Akku, insbesondere einem Wechselakku gespeisten Elektroantrieb aufweisen.

Der Akku selbst ist in einer verschliessbaren Hülle untergebracht, die ihn zugleich vor Umwelteinflüssen schützt. Die Hülle wiederum kann in einer Tasche einer flexiblen Verkleidung untergebracht sein oder ist Bestandteil einer solchen Verkleidung.

Bevorzugt ist eine zweite Sattelstütze für einen zweiten Sattel resp. ein zweites Sattelrohr, wobei der zweite Sattel direkt an den ersten Sattel anschliessen kann und/oder auf etwa gleicher Höhe angeordnet ist, was eine flexiblere Nutzung des Sattels resp. einen Sattel mit Zusatznutzen bei geringem Aufwand ermöglicht.

Die zweite Sattelstütze ist Bestandteil des Rahmens und als ein Multifunktionselement nutzbar. So kann der zweite Sattel ein Kindersitz sein, klappfähig und/oder als Transportbehältnis ausgebildet sein.

Neben der Erhöhung des Sitzkomforts oder der Mitnahme einer zweiten Person wird auch die Rahmenkonstruktion steifer und tragfähiger, so dass auch besonders grosse und/oder übergewichtige Personen noch Fahrrad fahren können.

Der Erfindungsgedanke ist grundsätzlich auch auf andere Fahrzeuge übertragbar, z. B. Dreiräder, Rollstühle, LEV oder Vierradfahrzeuge, soweit sie eine entsprechend geeignete Rahmenkonstruktion aufweisen.

Die Erfindung wird nachfolgend in Ausführungsbeispielen anhand einer Zeichnung näher beschrieben. In der Zeichnung zeigen die:

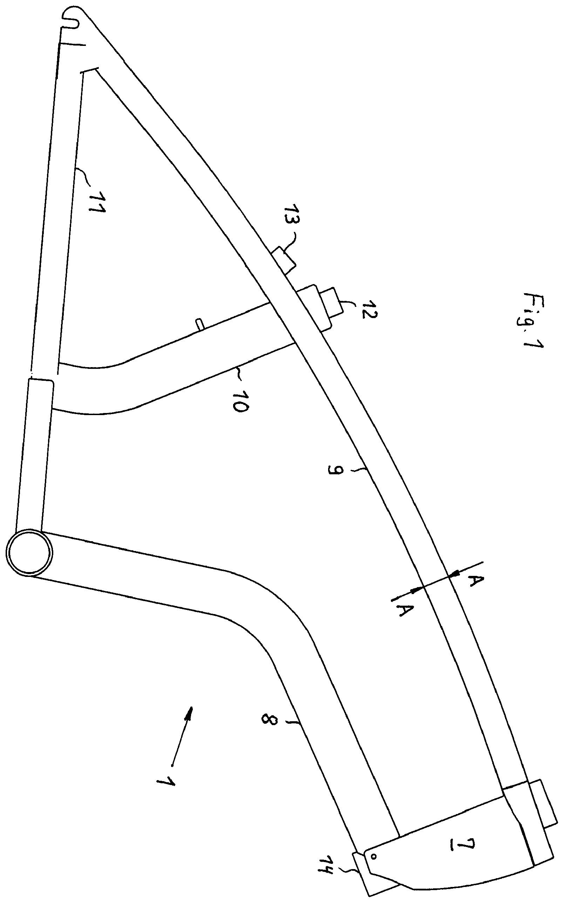

- Fig. 1:: einen Rahmen
- Fig. 2:: eine Schnittdarstellung durch das Oberrohr des Rahmens
- Fig. 3:: die Schnittdarstellung nach Fig. 2 in weiterer Ausgestaltung
- Fig. 4:: die beispielhafte (a, bis c,) Anordnung von Verkleidungsteilen
- Fig. 5:: Varianten (a-b) einer Akkuanordnung im Rahmen

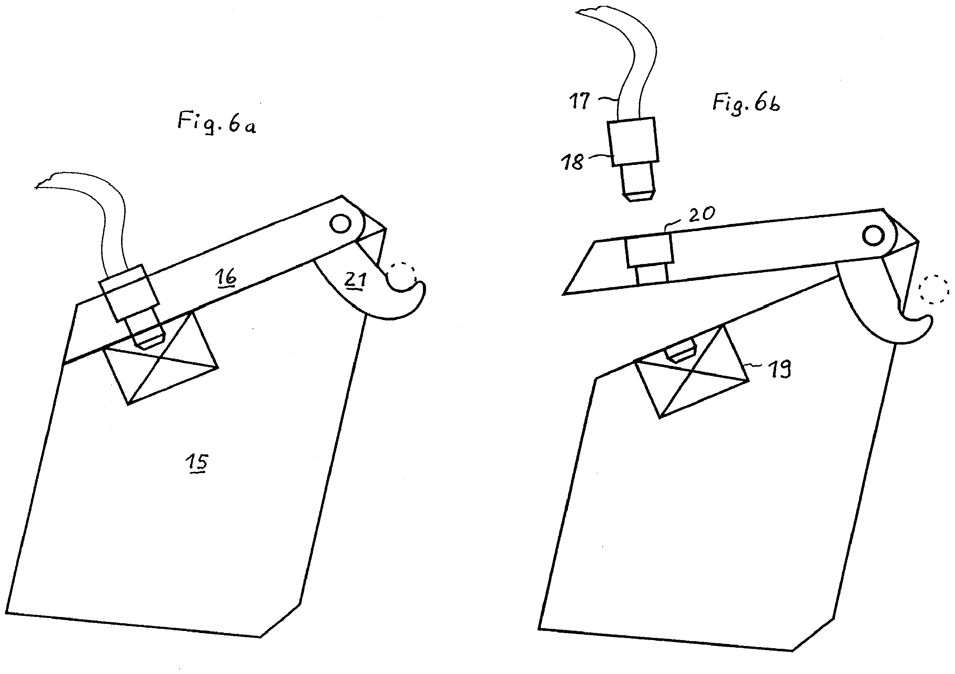

- Fig. 6:: den Akku in angeschlossener (a) und entnehmbarer (b) Position

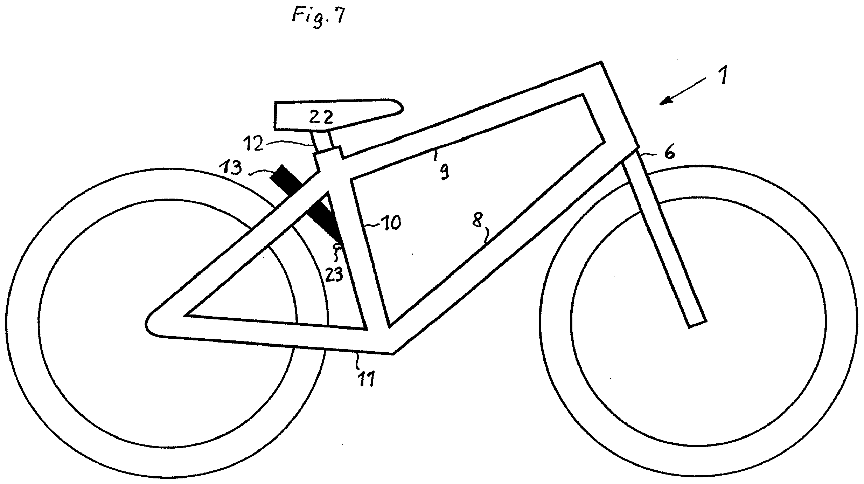

- Fig. 7:: ein Fahrrad mit zwei Sattelstützen
- Fig. 8:: beispielhaft Nutzungsvarianten der zweiten Sattelstütze (a, bis d,).

Ein Fahrrad, hier in Form eines E-Bikes weist zumindest einen Rahmen 1 mit einer Lagerung für die Vordergabel 6, einem Oberrohr 9, einem Unterrohr 8, einem Sattelrohr 10 mit Sattelstütze 12 sowie einer Kettenstrebe 11 mit Aussparungen zur üblichen Aufnahme eines Hinterrades auf. Die einzelnen Rahmenteile sind in einer grundsätzlich üblichen Weise zum Rahmen 1 gefügt und die Verbindung zwischen Unterrohr 8 und Kettenstrebe 11 ist zur Aufnahme eines, nicht explizit dargestellten Tretlagers sowie eines Elektroantriebs ausgebildet. Das Gabelrohr 14 für die Vordergabel 6 weist zudem eine Verschlussbox 7 auf, die ggf. auch ein Vorderlicht beinhalten kann.

Neben üblichen Metallen oder Karbon können Teile des Rahmens 1 auch aus Holz gefertigt sein.

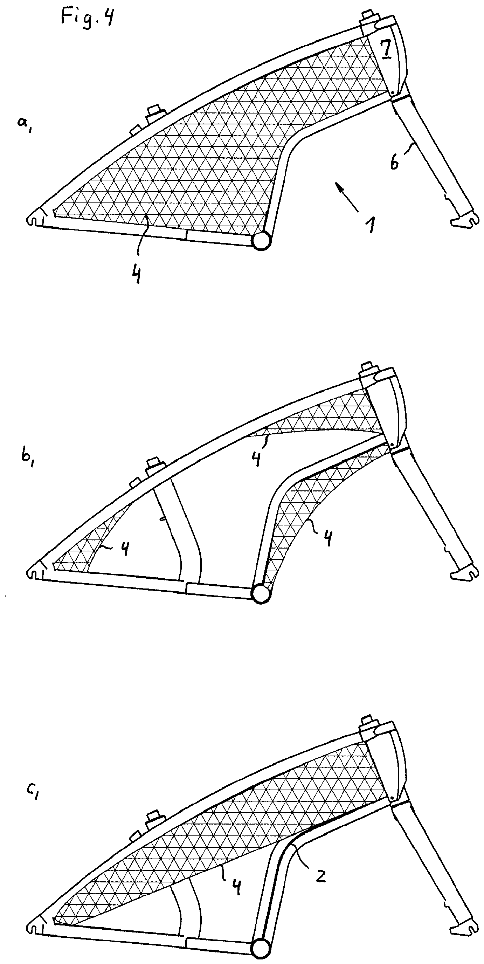

Insbesondere das Oberrohr 9, das Unterrohr 8 und die Kettenstütze 11 können in Richtung von deren Hauptachse mit ausgearbeiteten Profilen und/oder Strangpressprofilen 2 versehen sein. In diese werden formgleiche Gegenstücke 3 eingeführt, die wiederum Übergänge zu einem flexiblen textilen Verkleidungsteil 4 aufweisen. Vergleichbar einer Laufschiene sind die Gegenstücke 3 verschieblich in den Strangpressprofilen angeordnet, so dass das Verkleidungsteil 4 (wie in Fig. 4a-c dargestellt) gespannt werden kann. Insbesondere Verkleidungsteile 4, die am Oberrohr 9 und/oder Unterrohr 8 angebracht und gespannt sind, können in der Verschlussbox 7 arretiert und diebstahlsicher gesichert werden. Weitere Arretierungsorte zur Spannung eines Verkleidungsteils 4 können auch an anderen Stellen des Rahmens 1 angebracht sein. Die Verkleidungsteile 4 können nahezu beliebig angeordnet und gewechselt werden.

Die Verkleidungsteile 4 können als Tasche ausgebildet sein, z. B. zur staub- und regensicheren Aufnahme und Vibrationsdämpfung eines Akkus, zur Aufnahme von Werkzeug u. a., und/oder sie können farbig bedruckt oder mit Werbemotiven versehen sein.

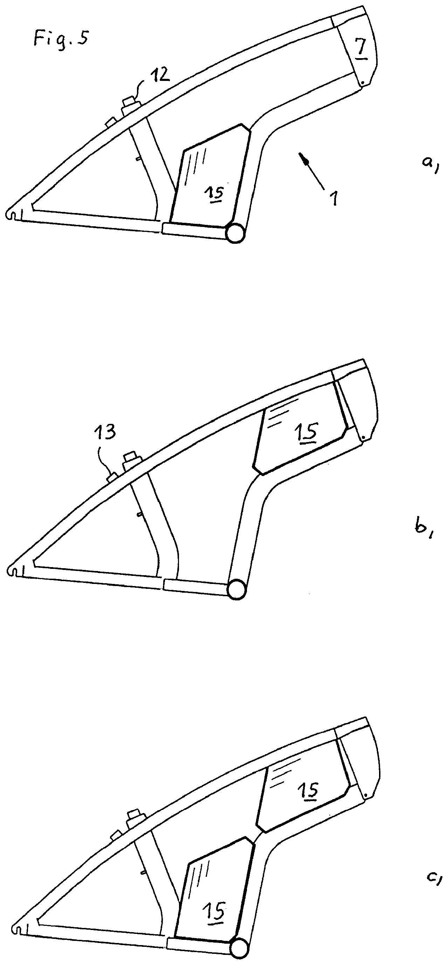

Fig. 5 zeigt beispielhaft (a-c) die Anordnung eines abschliessbaren Akkus 15 im Rahmen 1. Der Akku 15 ist als entnehmbarer Wechselakku mit einer mechanischen Lagesicherung und/oder einem elektromechanischen Diebstahlschutz versehen. Der Akku 15 ist mit einer Hülle mit Deckel 16 Die elektromechanischen Sicherung beinhaltet ein Kabel 17, dessen eines Ende im Rahmen 1 integriert ist und dessen anderes Ende als mechanischer Kopf 18 ausgebildet, der in ein Gegenstück eines elektromechanischen Verschlusses 19 im Akku 15 steckbar ist. Beim Einführen des Kopfes 18 in den Verschluss 19 durchquert der Kopf 18 eine abgesetzte Öffnung 20 im Deckel 16 und verschliesst diesen damit. Zugleich rastet eine Klinke 21 des Deckels 16 am Rahmen 1 ein.

Der aktivierte Aktor/Verschluss 19 im Akku 15 verhindert ein Herausziehen des Kopfes 18.

Nach Herausziehen des Kopfes 10 wird der Deckel 19 freigegeben, kann somit aufgeklappt und der Akku 15 entnommen werden.

Das Kabel 17 ist zugleich Sicherungs- und Elektrokabel, es ermöglicht den Abschluss des E-Bikes an einem Fahrradständer und zugleich den elektronischen Kontakt/Abschluss für den Betriebszustand.

Die Aktivierung der Verbindung zum Elektromotor kann z. B. schlüssellos mit einem nicht dargestellten One Button Anhänger erfolgen.

Der Akku 15 selbst ist in einer verschliessbaren Hülle mit dem Deckel untergebracht, die ihn zugleich vor Umwelteinflüssen schützt. Die Hülle wiederum kann in einer Tasche einer flexiblen Verkleidung untergebracht sein oder ist Bestandteil einer solchen Verkleidung.

Der Akku 15 kann zugleich mit einem Schliesselement am Rahmen 1 befestigt sein. Bevorzugt ist der Deckel 16 mit dem Rahmen 1 verbindbar und im angeschlossenen Zustand ist der Akku fest mit dem Rahmen 1 verbunden. Alternativ oder ergänzend kann auch eine elektronische Sicherung (mit Schlüssel) am Rahmen 1 vorgesehen sein.

Zudem kann die Antriebssteuerung mit einer Umschaltung des Akkus 15 von langsam/normal auf hohe Motordrehzahl versehen sein.

Hinter dem Sattelrohr 10 kann zudem eine zweite Sattelstütze 13 vorgesehen, die ggf. mit einem Anschlag 23 am Sattelrohr 10 abgestützt sein kann. Dies insbesondere dann, wenn die zweite Sattelstütze 13 entnehmbar gestaltet sein soll.

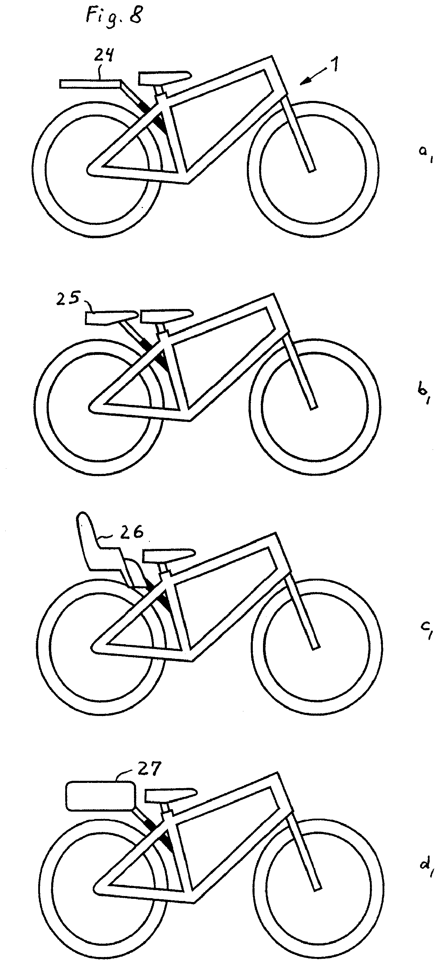

Die zweite Sattelstütze 13 kann für ein weiteres Funktionselement genutzt werden, das bei Bedarf auch klappfähig angeordnet sein kann. Beispiele derartiger Funktionselemente sind in Fig. 8 (a-d) angeführt. Möglich ist z. B. die Anordnung eines Gepäckträgers 24, eines zweiten Sattels 25 (auch zur Verlängerung des ersten Sattels 10 möglich), eines Kindersitzes 26 oder eines, ggf. wetterfesten und abschliessbaren Behältnisses 27.

### Bezugszeichenliste:

- 1: Rahmen
- 2: Strangpressprofil
- 3: Gegenstück
- 4: Verkleidungsteil
- 5: Übergang
- 6: Vordergabel
- 7: Verschlussbox
- 8: Unterrohr
- 9: Oberrohr
- 10: Sattelrohr
- 11: Kettenstütze
- 12: Sattelstütze
- 13: Sattelstütze
- 14: Gabelrohr
- 15: Akku
- 16: Deckel
- 17: Kabel
- 18: Kopf
- 19: Verschluss
- 20: Öffnung
- 21: Klinke
- 22: Sattel
- 23: Anschlag
- 24: Gepäckträger
- 25: Sattel
- 26: Kindersitz
- 27: Behältnis

## Patentansprüche

1. Fahrrad oder Elektrofahrrad mit einem Rahmen zur Aufnahme einer Gabel, eines Sattels, der Räder und möglicher Verschalungen etc., **dadurch gekennzeichnet, dass** es flexible Verkleidungsteile (4) aufweist und zumindest an oder in Teilen des Rahmens (1) Mittel zur verschieblichen und spannbaren Anordnung der flexiblen designbildender Verkleidungsteile (4) des Fahrrads vorgesehen sind, wobei die Mittel am oder im Rahmen (1) integriert sind und auch formgleiche Gegenstücke (3) an den Verkleidungsteilen umfassen, wobei die Mittel am oder im Rahmen (1) Profile oder Strangpressprofile (2) sind und die Gegenstücke verschieblich in den Profilen oder Strangpressprofilen angeordnet sind, so dass die Verkleidungsteile gespannt werden können.

2. Fahrrad nach Anspruch 1, **dadurch gekennzeichnet, dass** die flexiblen Verkleidungsteile (4) aus technischen Textilien, einem Kunststoff oder einer Kombination daraus bestehen.

3. Fahrrad nach Anspruch 2, **dadurch gekennzeichnet, dass** die flexiblen Verkleidungsteile (4) mit funktionellen Oberflächen und/oder Solarmodulen und/oder zusätzlichen Funktionen, insbesondere als Tasche oder Abdeckung versehen sind.

4. Fahrrad nach Anspruch 1, **dadurch gekennzeichnet, dass** die Mittel am Rahmen gesichert resp. verschliessbar sind.

5. Fahrrad nach Anspruch 1, **dadurch gekennzeichnet, dass** der Rahmen (1) zur Aufnahme einer zweiten Sattelstütze (13) ausgebildet ist.

6. Fahrrad nach Anspruch 1, **dadurch gekennzeichnet, dass** bei Ausbildung als E-Bike oder allgemein bei elektromotorischem Betrieb am Rahmen (1) ein Akku (15), insbesondere ein Wechselakku angebracht ist.

7. Fahrrad nach Anspruch 6, **dadurch gekennzeichnet, dass** der Akku (8) mit einer mechanischen Lagesicherung und einer elektromechanischen Sicherung versehen ist.

8. Fahrrad nach Anspruch 7, **dadurch gekennzeichnet, dass** die elektromechanischen Sicherung ein Kabel (9) beinhaltet, dessen eines Ende im Rahmen (1) integriert ist und dessen anderes Ende als mechanischer Kopf (10) ausgebildet ist, und dass der mechanische Kopf (10) in ein Gegenstück eines elektromechanischen Verschlusses (11) im Akku (8) bringbar ist.

9. Fahrrad nach Anspruch 5, **dadurch gekennzeichnet, dass** die zweite Sattelstütze (13) Teil des Rahmens (1) ist.

10. Fahrrad nach Anspruch 5 oder 9, **dadurch gekennzeichnet, dass** die zweite Sattelstütze (13) an einem Sattelrohr (10) abgestützt ist.

## Claims

1. A bicycle or an electric bicycle with a frame for receiving a fork, a saddle, the wheels and possible claddings etc., **characterised in that** it comprises flexible cladding parts (4) and at least in on or in parts of the frame (1) means are provided for the displaceable and tensile arrangement of the flexible design-creating cladding parts (4) of the bicycle, wherein the means are integrated on or in the frame (1) and also include counter-pieces (3) of same form on the cladding parts, wherein the means on or in the frame (1) are profiles or extruded profiles (2) and the counter-pieces are arranged displaceably in the profiles or extruded profiles so that the cladding pieces can be tensioned.

2. The bicycle according to claim 1, **characterised in that** the flexible cladding parts (4) are made of technical textiles, a plastic or a combination thereof.

3. The bicycle according to claim 2, **characterised in that** the flexible cladding parts (4) are provided with functional surfaces and/or solar modules and/or additional functions, in particular as a bag or cover.

4. The bicycle according to claim 1, **characterised in that** the means are secured or lockable on the frame.

5. The bicycle according to claim 1, **characterised in that** the frame (1) is designed to receive a second saddle support (13).

6. The bicycle according to claim 1, **characterised in that** when in the form of an e-bike or in general in the case of electric motor operation, a storage battery (15), in particular a replaceable storage battery, is attached to the frame (1).

7. The bicycle according to claim 6, **characterised in that** the storage battery (8) is provided with a mechanical position fixing device and an electromechanical safety device.

8. The bicycle according to claim 7, **characterised in that** the electromechanical safety device contains a cable (9), one end of which is integrated into the frame (1) and the other end is designed as a mechanical head (10) and **in that** the mechanical head (10) can be brought into a counter-piece of an electromechanical closure (11) in the storage battery (8).

9. The bicycle according to claim 5, **characterised in that** the second saddle support (13) is part of the frame (1).

10. The bicycle according to claim 5 or 9, **characterised in that** the second saddle support (13) is supported on a saddle tube (10).

## Revendications

1. Vélo ou vélo électrique comprenant un cadre pour recevoir une fourche, une selle, les roues et d'éventuelles coques etc., **caractérisé en ce qu'**il présente des parties d'habillage (4) flexibles et des moyens pour l'agencement mobile et en tension des parties d'habillage (4) flexibles formant le design du vélo sont prévus au moins sur ou dans des parties du cadre (1), dans lequel les moyens sont intégrés sur ou dans le cadre (1) et comprennent également des contre-parties (3) de même forme sur les parties d'habillage, dans lequel les moyens sont des profilés ou des profilés extrudés (2) sur ou dans le cadre (1) et les contre-parties sont disposées de manière mobile dans les profilés ou les profilés extrudés, de sorte que les parties d'habillage puissent être tendues.

2. Vélo selon la revendication 1, **caractérisé en ce que** les parties d'habillage (4) flexibles sont fabriquées dans des textiles techniques, un plastique ou une combinaison de ceux-ci.

3. Vélo selon la revendication 2, **caractérisé en ce que** les parties d'habillage (4) flexibles sont dotées de surfaces fonctionnelles et/ou de modules solaires et/ou de fonctions supplémentaires, en particulier en tant que sacoches ou protections.

4. Vélo selon la revendication 1, **caractérisé en ce que** les moyens sont bloqués, respectivement peuvent être fermés à clé sur le cadre.

5. Vélo selon la revendication 1, **caractérisé en ce que** le cadre (1) est conçu pour recevoir une seconde tige de selle (13).

6. Vélo selon la revendication 1, **caractérisé en ce que** dans la version en tant que vélo électrique ou généralement en fonctionnement électrique, une batterie (15), en particulier une batterie remplaçable est placée sur le cadre (1).

7. Vélo selon la revendication 6, **caractérisé en ce que** la batterie (8) est dotée d'une sécurité mécanique de position et d'une sécurité électromécanique.

8. Vélo selon la revendication 7, **caractérisé en ce que** la sécurité électromécanique contient un câble (9) dont l'une extrémité est intégrée dans le cadre (1) et dont l'autre extrémité est conçue en tant que tête mécanique (10) et que la tête mécanique (10) peut être amenée dans une contrepartie d'une fermeture électromécanique (11) dans la batterie (8).

9. Vélo selon la revendication 5, **caractérisé en ce que** la seconde tige de selle (13) fait partie du cadre (1).

10. Vélo selon la revendication 5 ou 9, **caractérisé en ce que** la seconde tige de selle (13) est appuyée sur un tube de selle (10).
